# EUROPEAN PATENT APPLICATION

(11) **EP 1 079 104 A1**
(43) Date of publication of application: **28.02.2001**
(21) Application number: 00901613.0
(22) Date of filing: 03.02.2000
(51) Int. Cl.: F03B 7/00, F03D 3/04

(54) **IMPROVED HYDRAULIC AND/OR WIND GENERATOR**

(30) Priority: 03.02.1999 UY 2537999; 17.08.1999 UY 2566699
(71) Applicant: Paciello, Fredy P., 07014 Palma de Mallorca (ES)
(72) Inventor: Paciello, Fredy P., 07014 Palma de Mallorca (ES)
(74) Representative: de Justo Vàzquez, Jorge M.
(86) International application number: ES0000034
(87) International publication number: WO0046498

(57) **Abstract**

Improved transformer of hydraulic and/or aeolic energy that takes advantage of the energy produced by currents, basically made up of a cylinder arranged as an axle and equipped with blades that turn when pushed by a flow or current, transmitting that mechanical energy through an axle that supports the aforementioned blades. With the unique characteristic that it takes maximum advantage of the aforementioned flow thanks to the mobility of some of the components that comprise it, either increasing or decreasing the surface area of the blades, or regulating or varying the angle of the aperture of the housing or channel through which the current enters the transformer.

## Description

### Object of the Invention

This invention refers to an improved hydraulic and/or aeolic energy transformer that provides essential new characteristics and notable advantages with respect to those known in the current technical situation. More specifically, the invention proposes the development of a device to make use of hydraulic, aeolic or any other type of energy created by currents of fluids in motion, conceived as a cylinder acting as an axle, equipped with blades that turn when pushed by a fluid flow, in such a way that, thanks to the mobility of either the surface of the blades or of the aperture of the transformer flow intake, notable advantages are obtained in terms of the output of the aforementioned transformer.

The field of application of this invention is included within the industry dedicated to the transformation of energy produced by the movement of a fluid or flow into mechanical energy or electrical energy.

### References and Summary of the invention

In the current technical situation, a multitude of devices are known that are capable of making use of the energy coming from fluids, both hydraulic and aeolic, among others, to transform it into mechanical energy or into electrical energy by means of a generator. These devices have several blades that turn when driven by the flow, and transmit this mechanical energy or movement through an axle that supports the aforementioned blades.

But these devices have the disadvantage that the output obtained is not optimised, since they do not always take full advantage of the entire flow due to causes such as the reduced size of the blades, or if the flow is two-way.

These devices also present the problem that the flow strikes the blades transversally, which means that it offers resistance to turning, or that the aforementioned flow is not properly directed.

This invention proposes several hydraulic and/or aeolic energy transformers that solve the problems mentioned above, in such a way that in some cases, the surface area of the blades can be varied according to the needs, to make this surface area greater when the blades drive the fluid and less when it offers resistance to the turning movement, and, in addition, it can be used in either flow direction or in response to a change in the direction of the flow, and in other cases in which the flow intake can be regulated, varying the width of the channel, in such a way that it allows greater facility to make the best used of the current and in this way, to increase output.

### Brief Description of the Drawings

The characteristics described above will be presented graphically making use of the figures in the attached drawings, which show as a purely illustrative and not limiting example, two preferred forms of execution. In these drawings:
Figure 1 shows a schematic view in perspective of a two-way hydraulic and/or aeolic energy transformer with the variable surface area of the blades.
Figure 2 shows a schematic view of a cross-section perpendicular to the axle of the transformer in the previous figure.
Figure 3 shows a perspective drawing of the connection between the blade and the guide of the transformer in Figure 1.
Figure 4 shows a drawing of examples of means of extending the sections of the blades of the transformer in Figure 1.
Figure 5 shows a perspective diagram of a one-way aeolic energy transformer with a variable aperture housing or channel.
Figure 6 shows a diagram of a cross-section perpendicular to the axle of the transformer of the previous figure.

### Description of the Preferred Embodiment of the Invention

To carry out the detailed description of the preferred embodiments of this invention that follows, continuous reference will be made to the Figures of the drawings, through which the same numerical references have been used for the same or similar parts.

For the description of this invention, two different embodiments have been developed with different solutions for different situations and problems. However, both present the same common principle of having the blades situated in such a way that the flow of the impulse current strikes its surfaces squarely at the spatial and temporal point at which maximum thrust is generated.

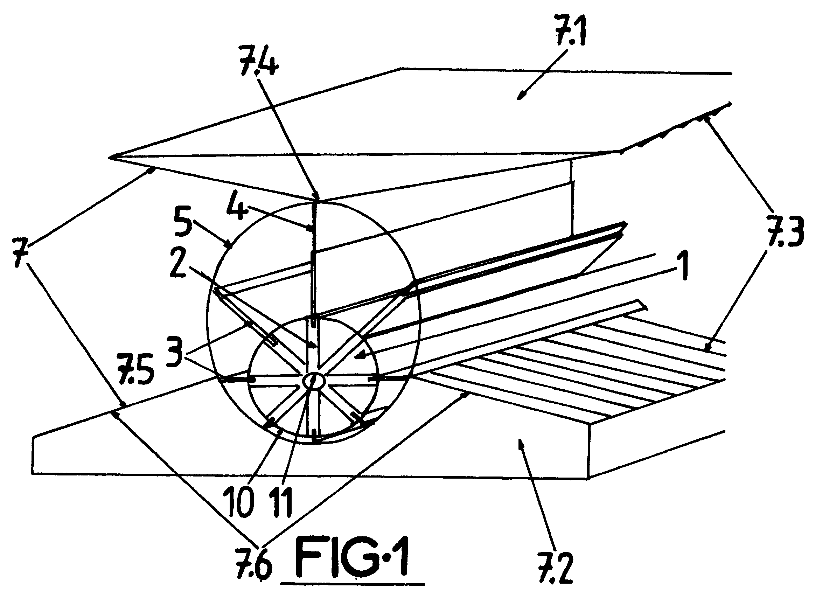

Figure 1 shows a schematic view in perspective of a hydraulic and/or aeolic energy transformer that includes a cylinder axle (1) equipped with radial slots or cavities (2) distributed at equal angles, in which a system of extendible blades (3) with two or more sections (4) is housed, a set of circular or ellipsoid guides (5) that regulate the dimensions of the radius or the surface area of each blade depending on the position (3) with which they are connected by a proper means (6), and lastly, a structure (7) to channel the fluid that drives the blades (3).

The cylinder axle (1), comprises a structure (10) turning around an axle (11), in such a way that the cylinder axle is equipped with radial intakes or cavities (2) in which the extendible blades (3) are housed.

The extendible blades (3) are made up of at least two sections (4) that are connected to each other and to the cylinder axle (1) by the proper means.

The guides (5) have a circular, elliptical, ellipsoid, or similar shape, and the free edges of the section (4) of the blade (3) furthest from the cylinder axle (1) are connected to them.

The relative position between the cylinder axle (1) and the guide (5) is such that this cylinder axle approaches the point of tangency with the guide located at one of the ends of the major axis of than the guide.

The structure (7) of the channel that orients the direction, intake and outlet of the fluid is symmetrical with respect to the major axis of the guide (5) and includes the upper wall (7.1) and lower wall (7.2), both equipped with channels (7.3) to allow the outlet of the return fluid if necessary, in such a way that it prevents the stoppage of the turning.

The wall (7.1) furthest from the cylinder axle (1) is horizontal and is made up of two sections shaped like connected wedges, and at their intersection (7.4), coincides with the point on the major axis of the guide that is furthest from the cylinder axle.

The other wall (7.2) closest to the cylinder axle (1) is made up of three sections, a central section (7.5) with a cylindrical or similar shape close to the guide, and at an angle slightly less than 180 degrees, the other two flat symmetrical sections (7.6) that form an angle between zero and thirty degrees with the horizontal.

The devices to transform hydraulic and/or aeolic energy that are described in the previous paragraphs can be grouped into batteries with the axles placed in different positions, such as parallel, coaxial horizontal axles, or vertical, etc.

Lastly, the device described in the previous paragraphs allows the installation of electrical energy generators on the cylinder axle (1), without the need for mechanical transmission.

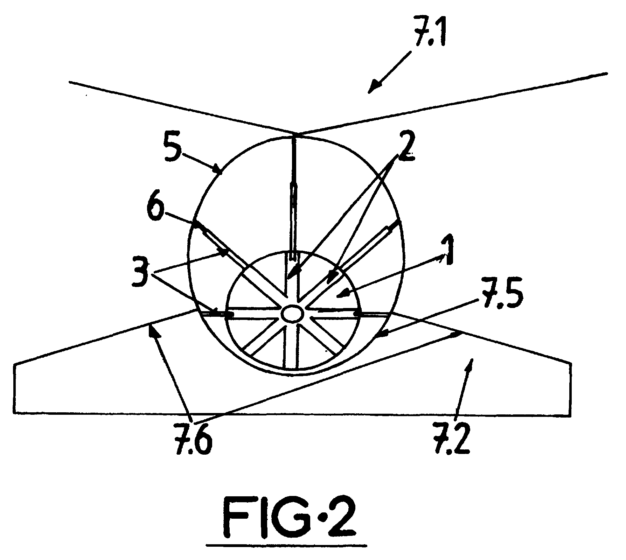

Figure 2 shows a diagram of a cross-section perpendicular to the axle of the transformer described in the previous paragraphs. This transformer makes it possible to take advantage of the movement of the fluid in both directions, in such a way that it allows it to be used in cases such as ocean currents, which are in constant motion (ebb and flow), obtaining energy without changing the position of the device and without requiring the use of elements that invalidate part of the operation due to the change in the direction of the tide. In other words, once the system is installed in a site, its useful operation is continuous and permanent.

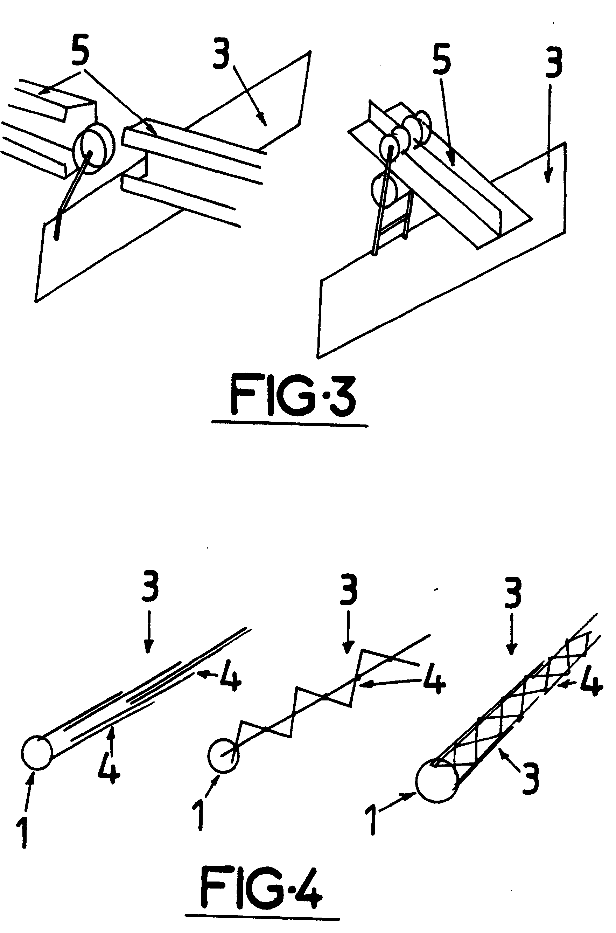

Figure 3 shows a perspective drawing of the connection between the blade (3) and the guide (5) of the transformer in Figures 1 and 2. The connection (6) is bilateral and is equipped with a sliding mechanism from that end of the blade (3) over the guide (5), such as, for example, a double bearing in a "T" shape of the guide, or wheels that turn inside a guide shape with an angular letter "C" section.

Figure 4 shows a drawing of examples of means to extend the sections of the blades (3) of the transformer in Figure 1, in such a way that the extendible blades (3) are made up of at least two sections (4) that are connected to each other and to the cylinder axle (1) by the appropriate means, such as scissors, folding turns, or similar means.

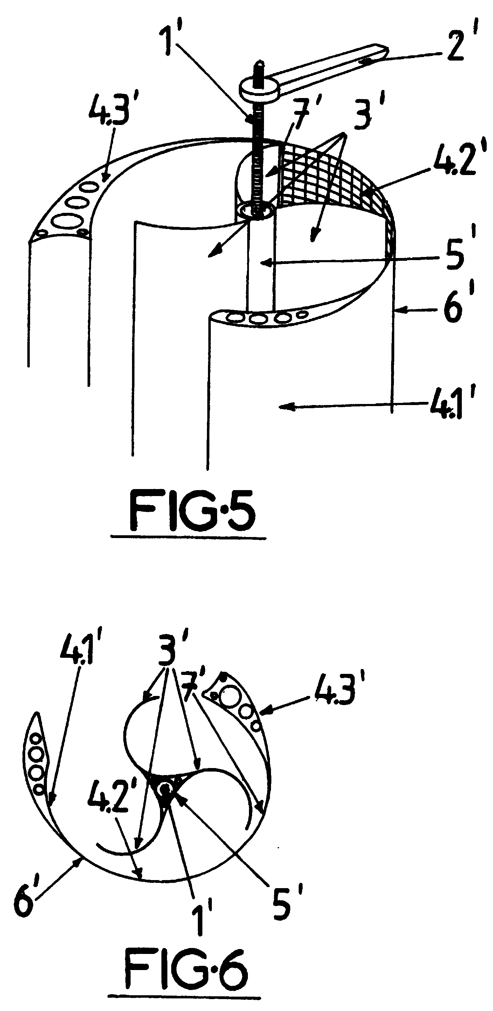

Figure 5 shows a perspective diagram of an aeolic energy transformer, in which, because of its similarity with the previous figures, the different parts have been referenced with the same numerical indicators, distinguished by "prime". As can be observed, the transformer comprises an axle (1') that can be directed depending on the direction of the fluid, a set of blades (3') connected solidly to a cylinder axle (5') or similar axle, which in turn is connected by turning to the main axle (1') that can be directed, and a housing (15) of generators parallel to the aforementioned axle that allows more effective use of the flow.

The axle (1') is attached at its ends to a frame (2') that supports it and which makes it possible to place the described device in the optimum position depending on the direction of the impulse fluid current.

The blades (3') are portions of cylindrical surfaces with straight sections that are equidistant from each other, with the approximate shape of a circumference arc. The number of blades will always be greater than one and will depend on the design characteristics, although in the preferred embodiment, the described device consists of three of these blades. These blades are connected to each other by one of their lateral edges to an axle (5') that consist of a cylindrical tube inside which the axle (1') is installed with the appropriate bearings or similar.

The housing (15) is also cylindrical in shape with a straight section made up of an open curve with the shape of a circumference arc of approximately 240 degrees, in such a way that the curvature radius varies depending on three sections (4.1'-4. 3') that make up this housing, which, in turn is a variable angle that can be regulated with respect to the main axle (1') as well as its curvature radius in the end sections of this housing.

The housing is made up of three sections (4.1' - 4.3'), connected by two generators (6' - 7') with different curvatures.

The section (4.1') helps to direct the fluid between this section and the concave area of the blade (3'), which this is in the proper position. This section (4.1') has a triangular shape and has a variable angle that can be regulated with respect to the generator (6') that separates it from the middle section (4.2') of the housing, in order to vary the distance between the section (4.1') of the housing and the circumference generated by the turning of the blades (3').

The middle section (4.2') is made up of a mesh that allows the outlet of fluid that drives the blades (3'). This mesh has two sections with different mesh sizes, with the one closer to the first section (4.1') having a larger size, in order to obtain less resistance to the fluid.

The third section (4.3') of the housing, in the preferred embodiment, in its straight section has a triangular shape with a vertex that coincides with that of the generator (7') that separates this section (4.3') from the mesh (4.2'). The side of this section that is close to the blades is concave, and the other is convex. The concave face of this section (4.3') is that which is responsible for directing the fluid to the blade in position to be driven, and keeps the current from working in the direction opposite the one being sought when it strikes the blade located in the position opposite that which is being driven. The exterior convex face of this section is that which deflects the fluid current that is not used.

Although sections 4.1' and 4.3' have been described as triangular shapes for the preferred embodiment, these sections could have different shapes, provided that they made it possible to use the concept described here. This way, they could show a stylised, roma, rectangular section, etc.

The common axle (5') of the blades (3') comprises the axle (1') that is the impeller of mechanical energy that can be transformed into any other type of energy with the proper means that are known, such as an electrical energy generator whose axle is the main axle (1') of the device.

Figure 6 shows a diagram in relation to a cross-section made perpendicular to the axle of the described transformer with regards to the previous figure 5, taking advantage of the same references marked with "prime" and clarifying the relative positioning of the different components.

It is not considered necessary to make the contents of this description more extensive for an expert in the subject to be able to understand its scope and the advantages derived from the invention, as well as to develop and put the object of the invention into practice.

However, it must be understood that the invention has been described as a preferred embodiment, and for this reason may be susceptible to modifications, with this not supposing any alteration in its fundamentals, with these modifications possibly affecting, especially, the shape, scale, manufacturing materials, the number of blades and/or the size of the aperture in the housing.

## Claims

1. Improved transformer of hydraulic and/or aeolic energy that makes use of the energy produced in currents, consisting of a cylinder (1) arranged as an axle equipped with blades (3) that turn when pushed by a flow or current, transmitting this mechanical energy through an axle (11) that supports the aforementioned blades, which is characterized by the fact that the blades are situated squarely with respect to the direction of the flow of the current at the point at which the thrust delivered by this flow on these blades is at its maximum.

2. Improved transformer of hydraulic and/or aeolic energy, according to claim 1, which is characterized by presenting a variable geometry to take maximum advantage of the aforementioned flow, either increasing or decreasing the surface area of the blades, or regulating or varying the angle of the aperture of the housing or channel through which the current enters the transformer.

3. Improved transformer of hydraulic and/or aeolic energy, according to claims 1 and 2, that is made up of a cylinder axle (1), which comprises a turning structure (10) around an axle (11), equipped with radial slots or cavities (2) distributed at equal angles, in which a system of extendible blades (3) with two or more sections (4) is housed, a set of circular or ellipsoid guides (5) that regulate the dimensions of the radius or the surface area of each blade depending on the position (3) with which they are connected by a proper means (6), and a structure (7) to channel the fluid that drives the blades (3).

4. Improved transformer of hydraulic and/or aeolic energy, according to claims 1 and 2 that is characterized by the fact that extendible blades (3) are made up of at least two sections (4) that are connected to each other and with the cylinder axle (1) by the proper means, such as scissors, folding turns, or similar means.

5. Improved transformer of hydraulic and/or aeolic energy, according to claims 1 and 2 that is characterized by the fact that the circular, elliptical, or ellipsoid guides (5) are bilaterally connected to the free edges of the blades by means of a double bearing in a "T" shape of the guide (5) or with wheels that turn inside a shape of the guide of section in angular "C".

6. Improved transformer of hydraulic and/or aeolic energy, according to claims 1 and 2 that is characterized by the fact that structure (7) of the channel that orients the direction, intake and outlet of the fluid is symmetrical with respect to the major axis of the guide (5) and includes the upper wall (7.1) and lower wall (7.2), both equipped with channels (7.3) to allow the outlet of the return fluid if necessary, in such a way that it prevents the stoppage of the turning.

7. Improved transformer of hydraulic and/or aeolic energy, according to claims 1 and 2 that is characterized by the fact that a multitude of the aforementioned transformers can be grouped into batteries with the axles arranged in parallel, coaxially, horizontally, and/or vertically.

8. Improved transformer of hydraulic and/or aeolic energy, according to claims 1 and 2 that is characterized by the fact that it makes it possible to install electrical energy generators inside the axle cylinder (1) without the need for mechanical transmission.

9. Improved transformer of hydraulic and/or aeolic energy, according to claims 1 and 2 that is characterized by the fact that it is possible to take advantage of the movement of the fluid in both directions, obtaining energy without changing the position of the device and without requiring the use of elements that invalidate part of the operation due to the change in the direction of the flow or current.

10. Improved transformer of hydraulic and/or aeolic energy, according to claims 1 and 2 that is characterized by the fact that it comprises an axle (1') that can be directed depending on the direction of the fluid, a set of blades (3') connected solidly to a cylinder axle (5') or similar axle, which in turn is connected by turning to the main axle (1') that can be directed, which is attached at its ends to a frame (2') that supports it and fixes it in the optimum position depending on the direction of the impeller current, and a partial housing, with variable orientation, made up of three sectors (4.1' - 4.3'), two of the ends directing the fluid current to the are of maximum dynamic advantage, and the third central one, made up of a mesh that allows the outlet of the fluid from the transformer.

11. Improved transformer of hydraulic and/or aeolic energy, according to claim 10 that is characterized by the fact that the blades (3') are portions of cylindrical surfaces with straight sections, equidistant from each other, with the approximate shape of a circumference are, and that are connected to each other by their side edges to the axle (5').

12. Improved transformer of hydraulic and/or aeolic energy, according to claim 10 that is characterized by the fact that the end section (4.1') has a triangular shape and has a variable angle that can be regulated with respect to the generator (6') that separates it from the middle section (4.2') of the housing, in order to vary the distance between the section (4.1') of the housing and the circumference generated by the turning of the blades (3'), and because it helps to direct the fluid between this section and the concave area of the blade (3').

13. Improved transformer of hydraulic and/or aeolic energy, according to claim 10 that is characterized by the fact that the mesh that makes up the section (4.2') and allows the outlet of fluid that drives the blades (3') has two sections with different mesh sizes, with the one closer to the first section (4.1') having a larger size, in order to obtain less resistance to the fluid.

14. Improved transformer of hydraulic and/or aeolic energy, according to claim 10 that is characterized by the fact that section (4.3') of the housing in its straight section has a triangular shape with a vertex that coincides with that of the generator (7') that separates this section (4.3') from the mesh (4.2') and makes it possible to vary and regulate the angle between both of them, in such a way that the side of this section that is close to the blades is concave and is responsible for directing the fluid to the blade in position to be driven, and keeps the current from working in the opposite direction and the other exterior face is convex and is responsible for deflecting the fluid current that is not used.

15. Improved transformer of hydraulic and/or aeolic energy, according to claim 10 that is characterized by the fact that the axle (5'), connected to the blades (3'), is made up of the axle (1') that is the impeller of mechanical energy that can be transformed into any other type of energy by means of the proper means, which are known.
